# EUROPEAN PATENT APPLICATION

(11) **EP 4 679 619 A1**
(43) Date of publication of application: **14.01.2026**
(21) Application number: 23925790.0
(22) Date of filing: 09.03.2023
(51) Int. Cl.: H01M 50/59

(54) **ELECTROCHEMICAL DEVICE AND ELECTRONIC DEVICE**

(71) Applicant: Ningde Amperex Technology Limited, Ningde, Fujian 352100 (CN)
(72) Inventor: LI, Yong, Ningde, Fujian 352100 (CN)
(74) Representative: Icosa
(86) International application number: PCT/CN2023/080579
(87) International publication number: WO 2024/183073

(57) **Abstract**

An electrochemical apparatus includes a housing, an electrode assembly, and an insulating sleeve. The electrode assembly is a wound structure, where a first electrode plate of the electrode assembly includes a current collector and a tab. The current collector includes a first side and a second side oppositely disposed in a first direction. The tab includes a first connection region connected to the first side and a second connection region connected to the first connection region. The electrode assembly includes a first end face and a second end face oppositely disposed in the first direction, where the second connection region forms the first end face. The insulating sleeve includes a first region and a second region integrally connected. The first region covers the first connection region, and the second region is disposed on the second connection region and has a first opening. The electrode assembly includes a first portion and a second portion connected in a second direction, where the first portion includes the first connection region, and the second portion is separated from the insulating sleeve. A width of the first portion is less than a width of the second portion. An electronic apparatus is further provided. This application can improve the reliability and service life of the electrochemical apparatus.

## Description

### TECHNICAL FIELD

This application relates to the field of energy storage technologies, in particular to an electrochemical apparatus and an electronic apparatus including such electrochemical apparatus.

### BACKGROUND

Electrochemical apparatuses (such as secondary batteries) are widely used in electronic products including electronic mobile devices, electric tools, and electric vehicles, and increasingly high requirements are imposed on the reliability and safety of electrochemical apparatuses.

An electrochemical apparatus typically includes a housing and an electrode assembly disposed within the housing. An electrode plate of the electrode assembly includes a current collector and a tab connected to the current collector. During use, the electrode assembly may move within the housing, which leads to a possibility of a short circuit caused by contact between the tab and the housing, reducing the reliability and service life of the electrochemical apparatus.

### SUMMARY

In view of this, this application provides an electrochemical apparatus with high reliability and long service life.

In addition, this application further provides an electronic apparatus including such electrochemical apparatus.

A first aspect of this application provides an electrochemical apparatus, including a housing and an electrode assembly disposed within the housing. The electrode assembly is a wound structure and includes a first electrode plate. The first electrode plate includes a first current collector and a first tab. A direction of a winding center axis is defined as a first direction, the first current collector includes a first side and a second side oppositely disposed in the first direction, and the first side extends to form the first tab. The first tab includes a first connection region connected to the first side and a second connection region connected to the first connection region, where the second connection region is bent relative to the first connection region. The electrode assembly includes a first end face and a second end face oppositely disposed in the first direction, where the second connection region forms the first end face. The electrochemical apparatus further includes an insulating sleeve. The insulating sleeve includes a first region and a second region integrally connected. The first region covers the first connection region, and the second region is disposed on the second connection region and has a first opening. A portion of the second connection region is exposed from the first opening. The electrode assembly includes a first portion and a second portion connected in the first direction. When viewed from a second direction perpendicular to the first direction, the first portion overlaps with the insulating sleeve, and the second portion is separated from the insulating sleeve. In the second direction, a width of the first portion is less than a width of the second portion.

In this application, the first region of the insulating sleeve can isolate at least a portion of the first connection region and the housing which exhibit opposite polarities, reducing a possibility of a short circuit caused by contact between this portion of the first connection region and the housing. Additionally, the second region of the insulating sleeve may fill a space between the second connection region and a first wall of the housing, reducing a possibility of damage to the electrode assembly due to movement along the first direction within the housing during mechanical abuse of the electrochemical apparatus. Therefore, this application improves the reliability and service life of the electrochemical apparatus. Furthermore, since the first region and the second region of the insulating sleeve are integrally connected, compared to a technical solution of the prior art in which four sides of the first connection region need to be coated with an adhesive and an additional insulating pad needs to be provided between the second connection region and the housing, this application facilitates simplification of the process.

In some possible embodiments, a width of the insulating sleeve is less than the width of the second portion, thereby reducing an influence of the insulating sleeve on the energy density of the electrochemical apparatus.

In some possible embodiments, the first region includes a first end connected to the second region and a second end disposed opposite the first end. The first region extends from the first end along the first direction.

In some possible embodiments, the insulating sleeve further includes a third region. The third region is connected between the first end and the second region. The third region extends from the first end deviating from the first direction. The provision of the third region can reduce a possibility of formation of a sharp tip at a joint between the first region and the second region, thereby reducing an impact of such a sharp tip on the housing during mechanical abuse and improving an impact resistance of the electrochemical apparatus.

In some possible embodiments, the first region includes a first end connected to the second region and a second end disposed opposite the first end. The first region extends from the first end deviating from the first direction. The second end is farther from the winding center axis than the first end. A distance between the inclined first region and a portion of the first connection region within the insulating sleeve increases, which helps reduce a possibility of fracture caused by contact between this portion of the first connection region and the first region due to movement during mechanical abuse of the electrochemical apparatus, thereby improving impact resistance. Additionally, a diameter of the first region at the second end is larger than a diameter of the first region at the first end, facilitating the sleeving of the insulating sleeve onto the first tab.

In some possible embodiments, the second region includes a third end connected to the first region and a fourth end disposed opposite the third end. The fourth end encloses the first opening. The second region extends from the third end along the second direction. This reduces a space occupied by the second region at a head of the electrode assembly, thereby reducing an influence of the insulating sleeve on the energy density of the electrochemical apparatus.

In some possible embodiments, the second region includes a third end connected to the first region and a fourth end disposed opposite the third end. The fourth end encloses the first opening. The second region extends from the third end deviating from the second direction. The fourth end is farther from the second connection region than the third end. Thus, the second region can not only fill the space between the second connection region and the housing but also provide better buffering during mechanical abuse of the electrochemical apparatus, reducing a possibility of damage to the electrode assembly due to movement within the housing.

In some possible embodiments, the insulating sleeve further includes a fourth region, where an edge of the first opening extends away from the first region to form the fourth region. The provision of the fourth region can also fill the space between the second connection region and the housing, reducing a possibility of damage to the electrode assembly due to movement within the housing.

In some possible embodiments, the electrode assembly further includes a second electrode plate and a separator, where the first electrode plate, the separator, and the second electrode plate are sequentially stacked and wound to form the electrode assembly. The separator is configured to prevent direct contact between the first electrode plate and the second electrode plate, thereby reducing a possibility of a short circuit caused by contact between the first electrode plate and the second electrode plate.

In some possible embodiments, the separator is located on at least a portion of an outermost layer of the electrode assembly. The separator can form a protective layer, reducing a risk of a short circuit due to abrasion of an electrode plate on an inner side of this portion of the separator, thereby improving a mechanical impact resistance of the electrode assembly.

In some possible embodiments, the separator located on the outermost layer includes a first inclined region that overlaps with both the first connection region and the first region in the second direction. The first inclined region is inclined relative to the first direction. The first region includes a first end connected to the second region and a second end disposed opposite the first end. When viewed from the first direction, the second end overlaps with the first inclined region. The first inclined region can further isolate at least a portion of the first connection region and the housing which exhibit opposite polarities, reducing a possibility of a short circuit caused by contact between the first connection region and the housing. Additionally, during mechanical abuse of the electrochemical apparatus, the first inclined region can reduce a possibility of fracture caused by direct contact between the at least a portion of the first connection region and the first region, thereby improving impact resistance.

In some possible embodiments, the separator located on the outermost layer further includes a third connection region connected to the first inclined region and a second inclined region connected to the third connection region. When viewed from the second direction, the third connection region and the second inclined region each overlap with the first region. The second inclined region is inclined relative to the first direction. The second inclined region can reduce a possibility of damage caused by direct contact between a first current collecting member and the insulating sleeve during mechanical abuse.

In some possible embodiments, the second end is in contact with the first inclined region. Thus, the first region can limit the first inclined region, reducing a possibility of the first inclined region expanding away from the winding center axis and being folded during mechanical abuse.

In some possible embodiments, the second electrode plate includes a second current collector and a second tab. The second current collector includes a third side and a fourth side oppositely disposed in the first direction, and the fourth side extends to form the second tab. The second tab includes a third connection region connected to the fourth side and a fourth connection region connected to the third connection region. The fourth connection region is bent relative to the third connection region, and the fourth connection region is located at the second end face. This facilitates an increase in a contact area between the fourth connection region and another component when the fourth connection region is electrically connected to the another component (such as the housing), thereby improving reliability of the electrical connection.

**In** some possible embodiments, the housing includes a first wall disposed toward the first end face, a second wall disposed opposite the first wall, and a third wall connected to both the first wall and the second wall. The first wall is electrically isolated from the second wall. The second connection region is electrically connected to the first wall, and the fourth connection region is electrically connected to the second wall. Thus, the first wall and the second wall exhibit opposite polarities, enabling the electrochemical apparatus to supply power to external components.

**In** some possible embodiments, the electrochemical apparatus further includes a first current collecting member disposed in the first direction between the second connection region and the second region. The second connection region is electrically connected to the first wall through the first current collecting member. The first current collecting member functions to collect current.

**In** some possible embodiments, the first current collecting member is provided with a second opening. When viewed from the first direction, the second opening overlaps with the first opening. The provision of the second opening helps reduce a weight of the first current collecting member. Additionally, when an electrolyte is injected into the housing, the electrolyte can sequentially flow through the first opening and the second opening to fully infiltrate the electrode assembly, reducing an influence of the first current collecting member on infiltration efficiency of the electrolyte.

**In** some possible embodiments, the fourth connection region is electrically connected to the second wall through a second current collecting member. The second current collecting member functions to collect current.

**In** some possible embodiments, the housing includes a first wall disposed toward the first end face, a second wall disposed opposite the first wall, a third wall connected to both the first wall and the second wall, and a pole disposed on the first wall. The pole is electrically isolated from the first wall. The second connection region is electrically connected to the pole, and the fourth connection region is electrically connected to the second wall. Thus, the first wall and the pole exhibit opposite polarities, enabling the electrochemical apparatus to supply power to external components.

In some possible embodiments, the first electrode plate further includes a first active material layer and a second active material layer, where the first active material layer, the first current collector, and the second active material layer are sequentially stacked. In the first direction, the insulating sleeve is separated from both the first active material layer and the second active material layer. This can reduce a possibility of an increase in a dimension of the electrochemical apparatus in the second direction due to the provision of the insulating sleeve, thereby reducing an influence of the insulating sleeve on the energy density of the electrochemical apparatus.

In some possible embodiments, when viewed from the first direction, the insulating sleeve is a continuous annular structure, so that the insulating sleeve has good insulating performance.

In some possible embodiments, a material of the insulating sleeve includes at least one of rubber, silicone, or plastic, so that the insulating sleeve has good insulating performance.

In some possible embodiments, a thickness of the insulating sleeve in the first direction ranges from 0.03 mm to 2 mm.

A second aspect of this application further provides an electronic apparatus including the foregoing electrochemical apparatus. The electronic apparatus is supplied with power by the foregoing electrochemical apparatus. Due to the provision of the insulating sleeve in the electrochemical apparatus, the insulating sleeve can reduce a possibility of a short circuit caused by contact between the first tab and the housing and can also reduce movement of the electrode assembly within the housing during mechanical abuse of the electrochemical apparatus, thereby maintaining high reliability and long service life.

### BRIEF DESCRIPTION OF DRAWINGS

The above and/or additional aspects and advantages of this application will become apparent and easy to understand from the description of some embodiments in conjunction with the following drawings, where:
FIG. 1 is a schematic structural diagram of an electrochemical apparatus according to an embodiment of this application.
FIG. 2 is an exploded view of the electrochemical apparatus shown in FIG. 1.
FIG. 3 is a cross-sectional view of the electrochemical apparatus shown in FIG. 1 along III-III.
FIG. 4 is a cross-sectional view of an electrode assembly of the electrochemical apparatus shown in FIG. 2 along IV-IV.
FIG. 5 is a schematic diagram of the electrochemical apparatus shown in FIG. 2 when viewed from a first direction.
FIG. 6 is an unfolded view of a first electrode plate of the electrode assembly of the electrochemical apparatus shown in FIG. 2.
FIG. 7 is an unfolded view of a second electrode plate of the electrode assembly of the electrochemical apparatus shown in FIG. 2.
FIG. 8 is a schematic structural diagram of an insulating sleeve of the electrochemical apparatus shown in FIG. 2 when viewed from a second direction.
FIG. 9 is a schematic structural diagram of the insulating sleeve of the electrochemical apparatus shown in FIG. 2 when viewed from the first direction.
FIG. 10 is a schematic structural diagram of an insulating sleeve in some other embodiments when viewed from the first direction.
FIG. 11 is a cross-sectional view of the electrochemical apparatus shown in FIG. 1 in some other embodiments.
FIG. 12 is a cross-sectional view of the electrochemical apparatus shown in FIG. 1 in some other embodiments.
FIG. 13 is a cross-sectional view of the electrochemical apparatus shown in FIG. 1 in some other embodiments.
FIG. 14 is a cross-sectional view of the electrochemical apparatus shown in FIG. 1 in some other embodiments.
FIG. 15 is a cross-sectional view of the electrochemical apparatus shown in FIG. 1 in some other embodiments.
FIG. 16 is a cross-sectional view of the electrochemical apparatus shown in FIG. 1 in some other embodiments.
FIG. 17 is a cross-sectional view of the electrochemical apparatus shown in FIG. 1 in some other embodiments.
FIG. 18 is a cross-sectional view of an electrochemical apparatus according to another embodiment of this application.
FIG. 19 is a cross-sectional view of an electrochemical apparatus according to another embodiment of this application.
FIG. 20 is a cross-sectional view of an electrochemical apparatus according to another embodiment of this application.
FIG. 21 is a cross-sectional view of an electrochemical apparatus according to another embodiment of this application.
FIG. 22 is a module architecture diagram of an electronic apparatus according to an embodiment of this application.

This application is further described using the following specific embodiments in conjunction with the above drawings.

### DETAILED DESCRIPTION

The technical solutions in some embodiments of this application are clearly described in detail below. Apparently, the described embodiments are only some embodiments rather than all embodiments of this application. Unless otherwise defined, all technical and scientific terms used herein have the same meanings as commonly understood by persons skilled in the art to which this application pertains. The terms used in the specification of this application are for the purpose of describing specific embodiments only and are not intended to limit this application.

The following describes some embodiments of this application in detail. However, this application may be implemented in various different ways and should not be construed as being limited to the exemplary embodiments set forth herein. These exemplary embodiments are provided to make this application be thoroughly conveyed to those skilled in the art in detail.

Additionally, in the accompanying drawings, sizes or thicknesses of various components and layers may be exaggerated for brevity and clarity. Throughout the text, the same numerical values represent the same elements. As used herein, the terms "and/or" and "as well as/or" include any and all combinations of one or more of the associated listed items. Additionally, it should be understood that when an element A is referred to as being "connected to" an element B, the element A may be directly connected to the element B, or an intervening element C may be present such that the element A and the element B can be indirectly connected to each other.

Further, when describing some embodiments of this application, the use of "may" refers to "one or more embodiments of this application".

The technical terms used herein are merely intended to describe specific embodiments rather than to limit this application. As used herein, the singular forms are intended to include the plural forms as well, unless the context clearly indicates otherwise. It should be further understood that the term "include" used in this specification indicates the presence of stated features, numerical values, steps, operations, elements, and/or components but does not preclude the presence or addition of one or more other features, numerical values, steps, operations, elements, components, and/or combinations thereof.

Spatially related terms such as "above" are used herein for ease of description to describe a relationship between one element or feature and another element(s) or feature(s) as illustrated in the figures. It should be understood that, in addition to the orientations depicted in the figures, spatially related terms are intended to encompass different orientations of the device or apparatus in use or operation. For example, if the device in the figures is turned over, elements described as "over" or "above" other elements or features would then be oriented "beneath" or "below" the other elements or features. Thus, the exemplary term "above" may encompass both orientations of above and below. It should be understood that although the terms first, second, third, and the like may be used herein to describe various elements, components, regions, layers, and/or portions, these elements, components, regions, layers, and/or portions should not be limited by these terms. These terms are used to distinguish one element, component, region, layer, or portion from another element, component, region, layer, or portion. Therefore, a first element, component, region, layer, or portion discussed below may be referred to as a second element, component, region, layer, or portion without departing from the conception of the exemplary embodiments.

As used herein, the terms "parallel" and "perpendicular" describe an ideal state between two components. During actual production or use, two components may be approximately parallel or perpendicular to each other. For example, with reference to the description of numerical values, "parallel" may indicate that an included angle between two straight lines is within a range of -10° to +10°, "parallel" may indicate that a dihedral angle of two planes is within a range of -10° to +10°, and "parallel" may alternatively indicate that an included angle between a straight line and a plane is within a range of -10° to +10°. "Perpendicular" may indicate that an included angle between two straight lines is within a range of 90°±10°, "perpendicular" may indicate that a dihedral angle of two planes is within a range of 90°±10°, and "perpendicular" may alternatively indicate that an included angle between a straight line and a plane is within a range of 90°±10°. Two components described as being "parallel" or "perpendicular" to each other may not be absolutely straight lines or planes and may be approximately straight lines or planes. From a macroscopic perspective, a component can be considered a "straight line" or "plane" as long as its overall extension direction is a straight line or a plane.

In this application, design relationships such as greater than, less than, or not equal to between parameter values need to exclude reasonable errors of measurement equipment.

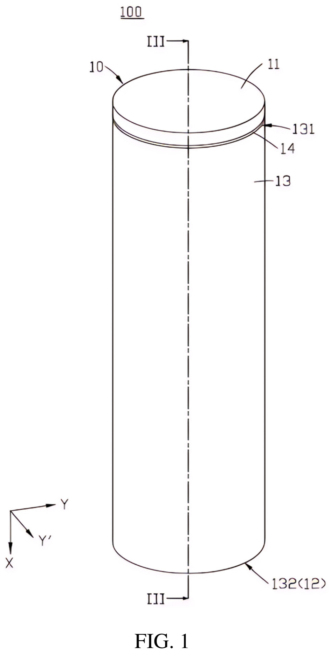

Referring to FIG. 1 to FIG. 3, an embodiment of this application provides an electrochemical apparatus 100, including a housing 10, an electrode assembly 20, and an electrolyte such as a liquid electrolyte (not shown in the figure). The housing 10 includes a first wall 11, a second wall 12, and a third wall 13. The first wall 11 and the second wall 12 are oppositely disposed in a first direction X. The first wall 11 may be substantially circular, and the second wall 12 may also be substantially circular. The first wall 11 and the second wall 12 may be disposed parallel to each other and both perpendicular to the first direction X. A first end 131 of the third wall 13 is connected to the first wall 11, and a second end 132 of the third wall 12 is connected to the second wall 12, forming a substantially cylindrical accommodating cavity S within the housing 10. When viewed from the first direction X, the first wall 11 covers the accommodating cavity S. The electrode assembly 20 and the electrolyte are accommodated within the accommodating cavity S. In some embodiments, the first wall 11 is electrically isolated from the second wall 12. The housing 10 may be entirely made of steel. In some embodiments, the steel housing includes elements Fe and C, and the steel housing 10 may further include one or more of elements Ni, Co, Al, Mn, Cr, Cu, Mg, Mo, S, Si, Ti, V, Pb, Sb, N, or P. For example, the first wall 11 is made of steel, and the second wall 12 and the second wall 13 are also made of steel. Additionally, the third wall 13 and the second wall 12 may be integrally formed, and the second wall 12 and the third wall 13 may be bonded and fixed by a first insulating layer 14, where the first insulating layer 14 electrically isolates the first wall 11 from the third wall 13, and the first wall 11 is also electrically isolated from the second wall 12. The material of the first insulating layer 14 may be an insulating material resistant to electrolyte corrosion, such as polystyrene (PS), polypropylene (PP), polyethylene (PE), polyester (PET), polyvinyl chloride (PVC), polyimide (PI), acrylonitrile-butadiene-styrene plastic (ABS), polycarbonate (PC), or polyamide (PA).

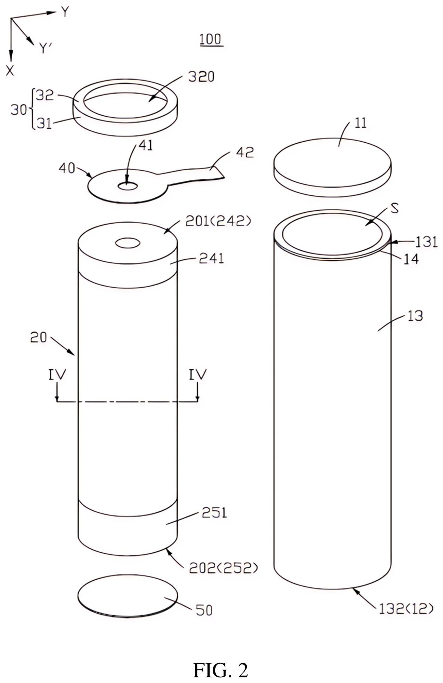

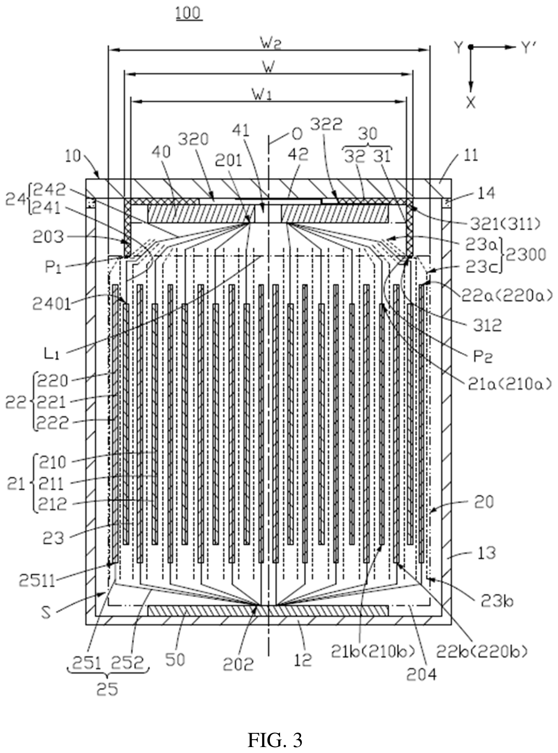

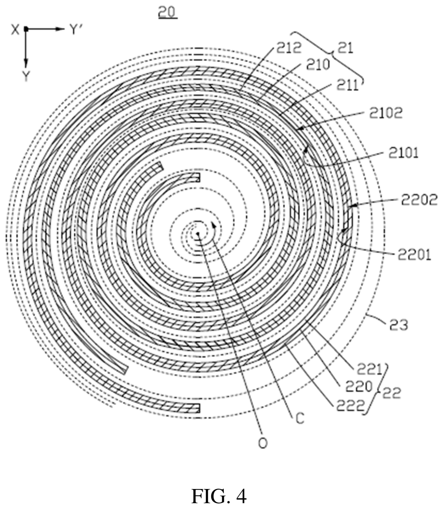

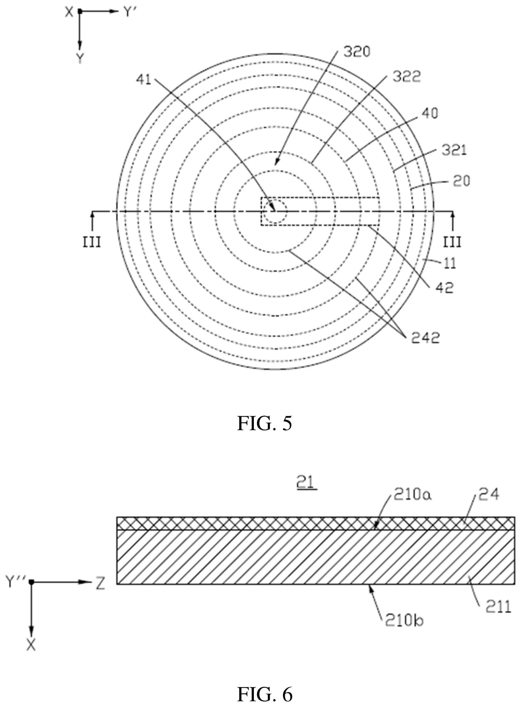

As shown in FIG. 2 and FIG. 3 (where FIG. 3 is a cross-sectional view of the electrochemical apparatus 100 shown in FIG. 1 along III-III, and an III-III section is parallel to the first direction X), the electrode assembly 20 includes a first end face 201 and a second end face 202 oppositely disposed in the first direction X. The first end face 201 is disposed toward the first wall 11, and the second end face 202 is disposed toward the second wall 12. Referring to FIG. 4 (where FIG. 4 is a cross-sectional view of the electrode assembly 20 shown in FIG. 2 along IV-IV, and the IV-IV section is perpendicular to the first direction X), the electrode assembly 20 is a wound structure and includes a first electrode plate 21, a second electrode plate 22, and a separator 23 disposed between the first electrode plate 21 and the second electrode plate 22. The separator 23 is configured to prevent direct contact between the first electrode plate 21 and the second electrode plate 22, thereby reducing a possibility of a short circuit caused by contact between the first electrode plate 21 and the second electrode plate 22. For simplicity, the separator 23 is shown with a dashed line (formed by a plurality of spaced short lines). The electrode assembly 20 has a winding direction C and a winding center axis O disposed along the first direction X. In some embodiments, after winding, the separator 23 is located on at least a portion of an outermost layer of the electrode assembly 20. For example, the separator 23 is located on the outermost layer of the electrode assembly 20. The separator 23 can form a protective layer, reducing a risk of a short circuit due to abrasion of an electrode plate on an inner side of this portion of the separator 23, thereby improving a mechanical impact resistance of the electrode assembly 20. The winding direction C refers to a moving direction from inside to outside around the winding center axis O along a point on the first electrode plate 21, the separator 23, or the second electrode plate 22 as shown in FIG. 4. The winding direction C may include two types, either a clockwise rotating direction or a counterclockwise rotating direction around the winding center axis O. In some embodiments, the winding direction C is a counterclockwise rotating direction around the winding center axis O as shown in FIG. 4. FIG. 5 is a schematic diagram of the electrochemical apparatus 100 shown in FIG. 2 when viewed from the first direction X, and FIG. 3 is actually a cross-sectional view of the electrochemical apparatus 100 shown in FIG. 5 along III-III. An outer contour of the electrode assembly 20 shown in FIG. 5 is the separator 23 located on the outermost layer of the electrode assembly 20 as shown in FIG. 4. In some other embodiments, the first electrode plate 21 or the second electrode plate 22 may also be located at the outermost layer of the electrode assembly 20. In some embodiments, the electrochemical apparatus 100 may be a cylindrical traction battery. In a cross section perpendicular to the first direction X, a cross-sectional shape of the electrode assembly 20 is substantially circular.

In some embodiments, the first electrode plate 21 includes a first active material layer 211, a first current collector 210, and a second active material layer 212 sequentially stacked. The first current collector 210 includes a first surface 2101 disposed toward the winding center axis O and a second surface 2102 disposed away from the winding center axis O. The first active material layer 211 is disposed on the first surface 2101, and the second active material layer 212 is disposed on the second surface 2102. The first current collector 210 may include aluminum or nickel. In some embodiments, when the first electrode plate 21 is a positive electrode, the first current collector 210 includes aluminum foil, and the aluminum foil has relatively low strength but good electrical conductivity. The first active material layer 211 and the second active material layer 212 both include an active material, which includes, for example, at least one of lithium cobalt oxide, lithium manganese oxide, lithium nickel oxide, lithium nickel cobalt manganese oxide, lithium iron phosphate, lithium iron manganese phosphate, lithium vanadium phosphate, lithium vanadium oxide phosphate, lithium-rich manganese-based material, or lithium nickel cobalt aluminate.

The second electrode plate 22 includes a third active material layer 221, a second current collector 220, and a fourth active material layer 222 stacked together. The second current collector 220 includes a third surface 2201 disposed toward the winding center axis O and a fourth surface 2202 disposed away from the winding center axis O. The third active material layer 221 is disposed on the third surface 2201, and the fourth active material layer 222 is disposed on the fourth surface 2202. The second current collector 220 may include copper, nickel, or a carbon-based conductive material. In some embodiments, when the second electrode plate 22 is a negative electrode, the second current collector 220 includes copper. The third active material layer 221 and the fourth active material layer 222 both include an active material, which may be selected from at least one of graphite-based material, alloybased material, lithium metal, or alloys thereof. The graphite-based material may be selected from at least one of artificial graphite or natural graphite; and the alloybased material may be selected from at least one of silicon, silicon oxide, tin, or titanium sulfide.

The separator 23 includes at least one of polyethylene, polypropylene, polyvinylidene fluoride, polyethylene glycol terephthalate, polyimide, or aramid.

Referring to FIG. 3, in the first direction X, the first current collector 210 includes a first end portion 21a and a second end portion 21b oppositely disposed, and the second current collector 220 includes a third end portion 22a and a fourth end portion 22b oppositely disposed. When viewed from a second direction Y perpendicular to the first direction X (it should be understood that any direction in a two-dimensional plane perpendicular to the first direction X may be considered as the second direction of this application; however, for ease of understanding, in FIG. 3, the second direction Y and a second direction Y' are used to distinguish two mutually perpendicular directions in this two-dimensional plane, such that the first direction X, the second direction Y, and the second direction Y' may form a three-dimensional coordinate system), the first end portion 21a overlaps with one end of the first active material layer 211, and the second end portion 21b overlaps with another end of the first active material layer 211. When viewed from the second direction Y, the third end portion 22a overlaps with one end of the third active material layer 221, and the second end portion 22b overlaps with another end of the third active material layer 221. The separator 23 includes a fifth end portion 23a and a sixth end portion 23b oppositely disposed. The first end portion 21a, the third end portion 22a, and the fifth end portion 23a are all disposed toward the first wall 11, and the second end portion 21b, the fourth end portion 22b, and the sixth end portion 23b are all disposed toward the second wall 12. When the first electrode plate 21 is a positive electrode plate and the second electrode plate 22 is a negative electrode plate, to reduce a possibility of lithium precipitation on the negative electrode plate, the third end portion 22a extends beyond the first end portion 21a in the first direction X, and the fourth end portion 22b extends beyond the second end portion 21b in the first direction X. In the first direction X, the third end portion 22a is closer to the first wall 11 than the first end portion 21a, and the fourth end portion 22b is closer to the second wall 12 than the second end portion 21b. Further, to fully prevent direct contact between the first electrode plate 21 and the second electrode plate 22, the fifth end portion 23a extends beyond the third end portion 22a in the first direction X, and the sixth end portion 23b extends beyond the fourth end portion 22b in the first direction X. In the first direction X, the fifth end portion 23a is closer to the first wall 11 than the third end portion 22a, and the sixth end portion 23b is closer to the second wall 12 than the fourth end portion 22b.

Referring to FIG. 6, FIG. 6 is an unfolded view of the first electrode plate 21, the first current collector 210 includes a first side 210a and a second side 210b oppositely disposed in the first direction X. Referring to both FIG. 3 and FIG. 6, after winding, when viewed from the second direction Y, the first side 210a overlaps with the first end portion 21a, and the second side 210b overlaps with the second end portion 21b. As shown in FIG. 6, after the first electrode plate 21 is unfolded, a three-dimensional coordinate system is established based on mutually perpendicular first direction X, third direction Y", and fourth direction Z, where the third direction Y" is defined as a stacking direction of the first active material layer 211, the first current collector 210, and the second active material layer 212 after the first electrode plate 21 is unfolded, and the fourth direction Z is an extension direction of the first electrode plate 21 before winding of the electrode assembly 20. Both the first side 210a and the second side 210b of the first current collector 210 can extend along the fourth direction Z. The first electrode plate 21 further includes a first tab 24, where the first side 210a extends to form the first tab 24 (for example, the first tab 24 is integrally formed with the first current collector 210). In the fourth direction Z, a width of the first tab 24 may be equal to a width of the first current collector 210, which can prevent over-concentrated current distribution in the first electrode plate 21, and reduce an internal resistance of the first electrode plate 21, thereby increasing a charge-discharge rate of the first electrode plate 21. The first tab 24 includes a first connection region 241 connected to the first side 210a and a second connection region 242 connected to the first connection region 241. The first connection region 241 includes a first connection end 2401 connected to the first current collector 210 (when viewed from the second direction Y, the first connection end 2401 overlaps with the first end portion 21a, and the first connection end 2401 overlaps with the second electrode plate 22), and the first connection region 241 may extend substantially along the first direction X from the first connection end 2401. The second connection region 242 is bent relative to the first connection region 241 and the second connection region 242 extends deviating from the first direction X. The second connection region 242 forms the first end face 201. Referring to FIG. 3 and FIG. 6, it can be understood that, when viewed from the second direction Y, the first tab 24, after winding, forms a multi-layer first tab 24 arranged in a stacked manner, and thus the first connection region 241 of the first tab 24 is also a multi-layer structure arranged in a stacked manner when viewed from the second direction Y.

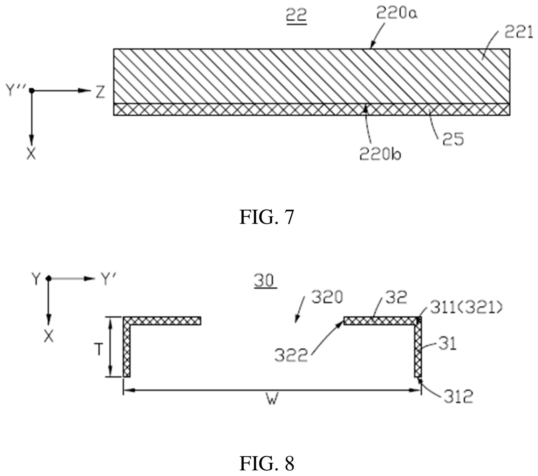

Referring to both FIG. 3 and FIG. 7, the second current collector 220 includes a third side 220a and a fourth side 220b oppositely disposed in the first direction X. When viewed from the second direction Y, the third side 220a overlaps with the third end portion 22a, and the fourth side 220b overlaps with the fourth end portion 22b. The first side 210a and the third side 220a are located on the same side of the electrode assembly 20, and the second side 210b and the fourth side 220b are located on another side of the electrode assembly 20. The second electrode plate 22 further includes a second tab 25, where the fourth side 220b extends to form the second tab 25 (for example, the second tab 25 is integrally formed with the second current collector 220). In the fourth direction Z, a width of the second tab 25 may be equal to a width of the second current collector 220, which can prevent over-concentrated current distribution in the second electrode plate 22, and reduce an internal resistance of the second electrode plate 22, thereby increasing a charge-discharge rate of the second electrode plate 22. The second tab 25 includes a third connection region 251 connected to the fourth side 220b and a fourth connection region 252 connected to the third connection region 251. The third connection region 251 includes a second connection end 2511 connected to the second current collector 220 (when viewed from the second direction Y, the second connection end 2511 overlaps with the third end portion 22a, and the second connection end 2511 is separated from the first electrode plate 21), and the third connection region 251 may extend substantially along the first direction X from the second connection end 2511. The fourth connection region 252 is bent relative to the third connection region 251 and the fourth connection region 252 is located at the second end face 202. Referring to FIG. 3 and FIG. 7, it can be understood that, when viewed from the second direction Y, the second tab 25, after winding, forms a multi-layer second tab 25 arranged in a stacked manner, and thus the third connection region 251 of the second tab 25 is also a multi-layer structure arranged in a stacked manner when viewed from the second direction Y.

During manufacturing, active materials are respectively applied onto two surfaces of the first current collector 210 to form the first electrode plate 21, and one end of the first current collector 210 along the first direction X is provided with the first tab 24, where the first tab 24 is separated from both the first active material layer 211 and the second active material layer 212. Active materials are respectively applied onto two surfaces of the second current collector 220 to form the second electrode plate 22, and one end of the second current collector 220 along the first direction X is provided with the second tab 25, where the second tab 25 is separated from both the third active material layer 221 and the fourth active material layer 222. After the first electrode plate 21, the separator 23, and the second electrode plate 22 are sequentially stacked and wound, a portion of the first tab 24 is flattened using a flattening device (not shown in the figure) to form a first flattened surface (the second connection region 242 forms the first flattened surface). Similarly, a portion of the second tab 25 is flattened using the flattening device to form a second flattened surface (the fourth connection region 252 forms the second flattened surface). Thus, an electrode assembly 20 with a full-tab structure is obtained.

As shown in FIG. 3, the second connection region 242 is electrically connected to the first wall 11, and the fourth connection region 252 is electrically connected to the second wall 12. At this time, the first wall 11 and the second wall 12 exhibit opposite polarities, enabling the electrochemical apparatus 100 to supply power to external components (not shown in the figure). When the first electrode plate 21 is a positive electrode plate and the second electrode plate 22 is a negative electrode plate, the first wall 11 exhibits positive polarity, and the second wall 12 and the third wall 13 exhibit negative polarity.

Referring to FIG. 2, FIG. 3, FIG. 5, and FIG. 8, the electrochemical apparatus 100 further includes an insulating sleeve 30. A material of the insulating sleeve 30 includes at least one of rubber, silicone, or plastic. In some embodiments, the material of the insulating sleeve 30 is an insulating material resistant to electrolyte corrosion, such as polystyrene (PS), polypropylene (PP), polyethylene (PE), polyester (PET), polyvinyl chloride (PVC), polyimide (PI), acrylonitrile-butadiene-styrene plastic (ABS), polycarbonate (PC), or polyamide (PA). As shown in FIG. 3, the insulating sleeve 30 covers the first tab 24. In some embodiments, in the first direction X, the insulating sleeve 30 is separated from both the first active material layer 211 and the second active material layer 212. When viewed from the second direction Y, the insulating sleeve 30 does not overlap with the first active material layer 211, and the insulating sleeve 30 does not overlap with the second active material layer 212. This can reduce a possibility of an increase in a dimension of the electrochemical apparatus 100 in the second direction Y' due to the provision of the insulating sleeve 30, thereby reducing an influence of the insulating sleeve 30 on the energy density of the electrochemical apparatus 100. In some embodiments, in the first direction X, the insulating sleeve 30 is separated from both the third active material layer 221 and the fourth active material layer 222. When viewed from the second direction Y, the insulating sleeve 30 does not overlap with the third active material layer 221, and the insulating sleeve 30 does not overlap with the fourth active material layer 222. This also can reduce an influence of the insulating sleeve 30 on the energy density of the electrochemical apparatus 100.

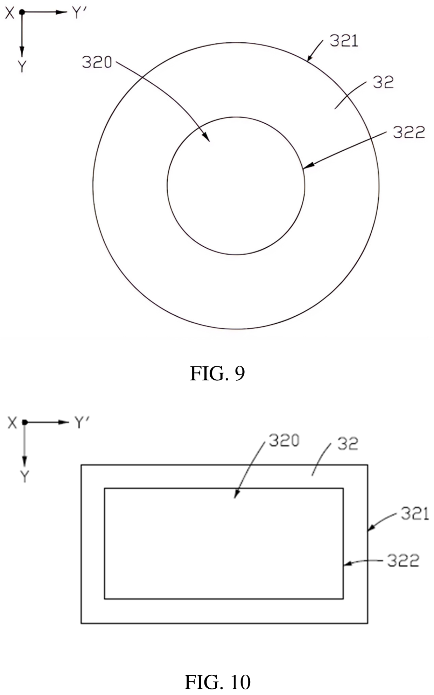

The insulating sleeve 30 includes a first region 31 and a second region 32 integrally connected, where the second region 32 is bent relative to the first region 31. The first region 31 covers at least a portion of the first connection region 241, and thus the first region 31 can isolate at least a portion of the first connection region 241 and the third wall 13 which exhibit opposite polarities, reducing a possibility of a short circuit caused by contact between this portion of the first connection region 241 and the third wall 13. The first region 31 includes a first end 311 connected to the second region 32 and a second end 312 disposed opposite the first end 311. When viewed from the second direction Y, the second end 312 overlaps with the first connection region 241, and the second end 312 may be located in the first direction X between the first connection end 2401 of the first connection region 241 and the second connection region 242. The second region 32 is disposed on the second connection region 242, where the second connection region 242 is closer to the second region 32 than the first connection region 241. The second region 32 may fill a space between the second connection region 242 and the first wall 11. When viewed from the second direction Y, the second connection region 242 may be located in the first direction X between the first end 311 and the second end 312. The second region 32 includes a third end 321 connected to the first region 31 and a fourth end 322 disposed opposite the third end 321. When viewed from the first direction X, the third end 321 is separated from the second connection region 242, and the fourth end 322 overlaps with the second connection region 242. In some embodiments, as shown in FIG. 9 and FIG. 10, when viewed from the first direction X, the insulating sleeve 30 is a continuous annular structure. For example, FIG. 9 shows that, when viewed from the first direction X, the insulating sleeve 30 is a continuous circular ring structure. FIG. 10 shows that, when viewed from the first direction X, the insulating sleeve 30 is a continuous rectangular ring structure. The specific shape of the insulating sleeve 30 when viewed from the first direction X may be modified according to a shape of the flattened surface formed by the second connection region 242. Thus, when viewed from the first direction X, the first end 311 and the second end 312 are both in edge-closed annular shapes, and the third end 321 and the fourth end 322 are also both in edge-closed annular shapes when viewed from the first direction X. In this application, "continuous" means that along a circumferential direction of the insulating sleeve 30, the insulating sleeve 30 has no interrupted regions or interfaces. Therefore, the insulating sleeve 30 of this application differs from an insulating structure formed by attaching an adhesive to a head of the electrode assembly 20.

As shown in FIG. 3 and FIG. 8, in some embodiments, the first region 31 extends from the first end 311 along the first direction X. The second region 32 extends from the third end 321 along the second direction Y', such that when viewed from the second direction Y, the first region 31 is perpendicular to the second region 32. Since the second region 32 extends along the second direction Y', a space occupied by the second region 32 at a head of the electrode assembly 20 is reduced, thereby reducing an influence of the insulating sleeve 30 on the energy density of the electrochemical apparatus 100.

As shown in FIG. 3 and FIG. 5, the second region 32 has a first opening 320, and the fourth end 322 encloses the first opening 320. When viewed from the first direction X, a portion of the second connection region 242 is exposed from the first opening 320. The second connection region 242 and the first wall 11 can be electrically connected through first opening 320. Additionally, when an electrolyte is injected into the accommodating cavity S of the housing 10, the electrolyte can flow through the first opening 320 to fully infiltrate the electrode assembly 20, reducing an influence of the insulating sleeve 30 on infiltration efficiency of the electrolyte. Moreover, the second connection region 242 can be electrically connected to the first wall 11 through the first opening 320. It can be understood that the first wall 11 may be provided with an electrolyte injection port (not shown in the figure), and the electrolyte injection port is sealed with a sealing nail after electrolyte injection is completed.

In some embodiments, a thickness T of the insulating sleeve 30 in the first direction X ranges from 0.03 mm to 2 mm. As shown in FIG. 8, the thickness T is a height of the insulating sleeve 30 from the first end 311 to the second end 312.

As shown in FIG. 2 and FIG. 3, in some embodiments, the electrochemical apparatus 100 further includes a first current collecting member 40 disposed in the first direction X between the second connection region 242 and the second region 32, where the first current collecting member 40 is entirely made of a conductive material. For example, the first current collecting member 40 is made of a metal material which is, for example, selected from a metal such as aluminum, copper, steel, nickel, or alloys thereof. The second connection region 242 is electrically connected to the first wall 11 through the first current collecting member 40. The first current collecting member 40 functions to collect current. In this case, the provision of the insulating sleeve 30 can also limit the first current collecting member 40, reducing a possibility of a short circuit caused by contact between the first current collecting member 40 and the second wall 12 or the third wall 13 of the housing 10 when the first current collecting member 40 is separated from the second connection region 242. In some embodiments, the first current collecting member 40 is provided with a bendable segment 42, the bendable segment 42 can bend under the action of an external force, allowing the bendable segment 42 to extend from the first opening 320 and to be connected to the first wall 11. In some embodiments, the first current collecting member 40 is provided with a second opening 41. When viewed from the first direction X, the second opening 41 overlaps with the first opening 320. The provision of the second opening 41 helps reduce a weight of the first current collecting member 40. Additionally, when an electrolyte is injected into the accommodating cavity S of the housing 10, the electrolyte can sequentially flow through the first opening 320 and the second opening 41 to fully infiltrate the electrode assembly 20, reducing an influence of the provision of the first current collecting member 40 on infiltration efficiency of the electrolyte. The first current collecting member 40 may be welded (such as by resistance welding or laser welding) to the second connection region 242. The second connection region 242 forms a flattened surface through a flattening process, facilitating an increase in a contact area between the second connection region 242 and the first current collecting member 40, facilitating welding of the second connection region 242 to the first current collecting member 40, and improving reliability of the electrical connection.

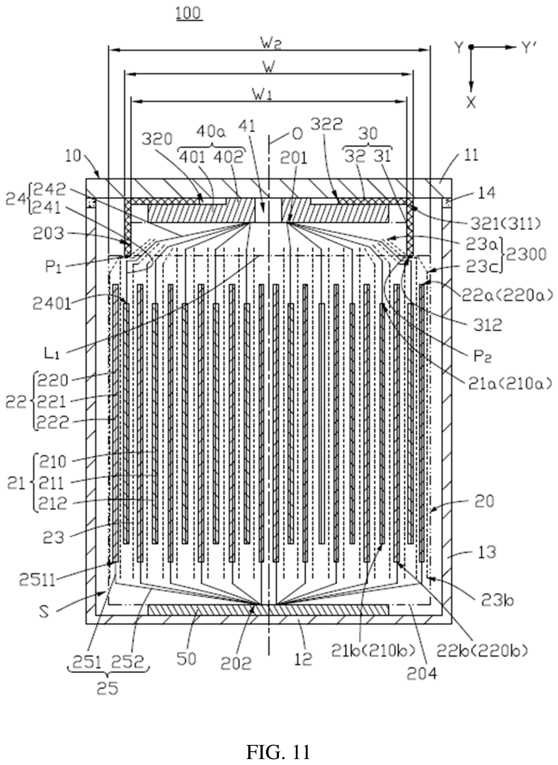

Referring to FIG. 11 to FIG. 13, the structure or position of the first current collecting member 40 may also be modified. As shown in FIG. 11, in some other embodiments, the bendable segment 42 may be omitted. The first current collector 40a, when viewed from the second direction Y, is in a substantially inverted T shape. The first current collector 40a includes a first current collecting region 401 and a second current collecting region 402 connected in the first direction X. The first current collecting region 401 is disposed in the first direction X between the second connection region 242 and the second region 32, and the first current collecting region 401 is connected to the second connection region 242. The second current collecting region 402 is disposed within the first opening 320 of the second region 32. The second opening 41 may run through the first current collecting region 401 and the second current collecting region 402 in the first direction X. Thus, the second connection region 242 may also be electrically connected to the first wall 11.

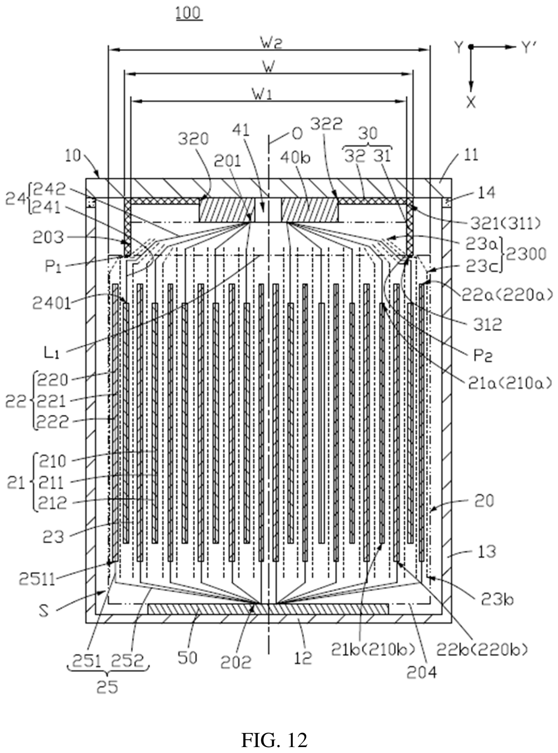

As shown in FIG. 12, in some other embodiments, a first current collector 40b is at least partially disposed within the first opening 320, and the first current collector 40b directly electrically connects the second connection region 242 to the first wall 11. FIG. 12 shows that, in the first direction X, a thickness of the first current collector 40b is greater than a thickness of the second region 32. It can be understood that the thickness of the first current collector 40b may also be substantially equal to the thickness of the second region 32. This is not limited in this application.

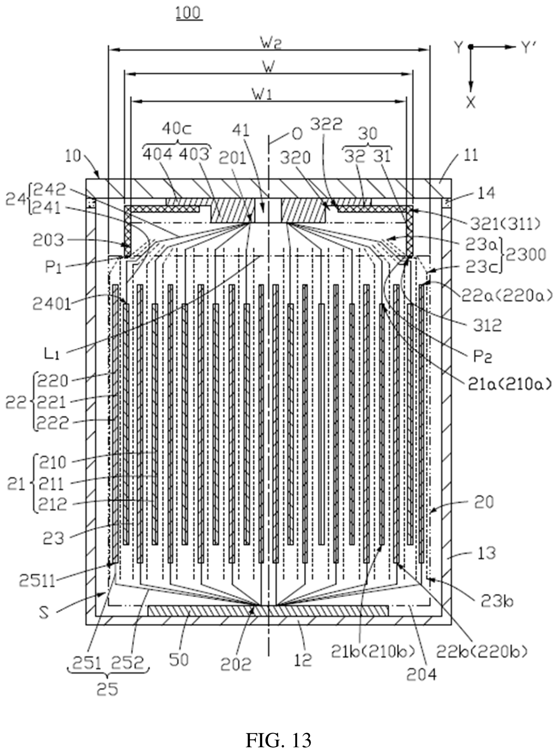

As shown in FIG. 13, in some other embodiments, in the second direction Y, a first current collecting member 40c may alternatively be located between the first wall 11 and the second region 32. The first current collector 40, when viewed from the second direction Y, is in a substantially T shape. The first current collecting member 40c includes a third current collecting region 403 and a fourth current collecting region 404 connected in the first direction X. The third current collecting region 403 is at least partially disposed within the first opening 320 of the second region 32, and the third current collecting region 403 is connected to the second connection region 242. The fourth current collecting region 404 is disposed in the first direction X between the first wall 11 and the second region 32. The second opening 41 may run through the third current collecting region 403 and the fourth current collecting region 404 in the first direction X. Thus, the second connection region 242 may also be electrically connected to the first wall 11.

As shown in FIG. 2 and FIG. 3, in some embodiments, when viewed from the first direction X, the first opening 320 and the second opening 41 may each be circular. In other embodiments, the shapes of the first opening 320 and the second opening 41 may be modified, for example, may be modified into an elliptical shape, a square shape, or a hexagonal shape.

As shown in FIG. 3, in some embodiments, the electrochemical apparatus 100 further includes a second current collecting member 50 disposed in the first direction X between the fourth connection region 252 and the second wall 12, where the second current collecting member 50 is entirely made of a conductive material. For example, the second current collecting member 50 is made of a metal material which is, for example, selected from a metal such as aluminum, copper, steel, nickel, or alloys thereof. The fourth connection region 252 is electrically connected to the second wall 12 through the second current collecting member 50. The second current collecting member 50 functions to collect current. The second current collecting member 50 may be welded to the fourth connection region 252. The fourth connection region 252 forms a flattened surface through a flattening process, facilitating an increase in a contact area between the fourth connection region 252 and the second current collecting member 50, facilitating welding of the fourth connection region 252 to the second current collecting member 50, and improving reliability of the electrical connection. In other embodiments, the fourth connection region 252 may alternatively be directly welded to the second wall 12.

As shown in FIG. 3, the electrode assembly 20 includes a first portion 203 and a second portion 204 connected in the first direction X. When viewed from the second direction Y, the first portion 203 overlaps with the insulating sleeve 30, the first portion 203 is disposed within the insulating sleeve 30, and the second portion 204 is separated from the insulating sleeve 30. When viewed from the second direction Y, when a virtual line passing through the second end 312 of the first region 31 and perpendicular to the first direction X is defined as L₁, the virtual line L₁ divides the electrode assembly 20 into the first portion 203 and the second portion 204. The virtual line L₁ is defined to intersect with an outermost layer of the electrode assembly 20 at a first intersection point P₁ and a second intersection point P₂, respectively, where a distance between the first intersection point P₁ and the second intersection point P₂ is a width W₁ of the first portion 203 in the second direction Y'. A width W₂ of the second portion 204 in the second direction Y' is a maximum width of the electrode assembly 20. A width W of the insulating sleeve 30 in the second direction Y is an outer diameter of the insulating sleeve 30 at the second end 312. In this application, in the second direction Y', the width W₁ of the first portion 203 is less than the width W₂ of the second portion 204. In some embodiments, the width W of the insulating sleeve 30 is less than the width W₂ of the second portion 204. Since the width W of the insulating sleeve 30 is less than the width of the electrode assembly 20, an influence of the insulating sleeve 30 on the energy density of the electrochemical apparatus 100 can be reduced.

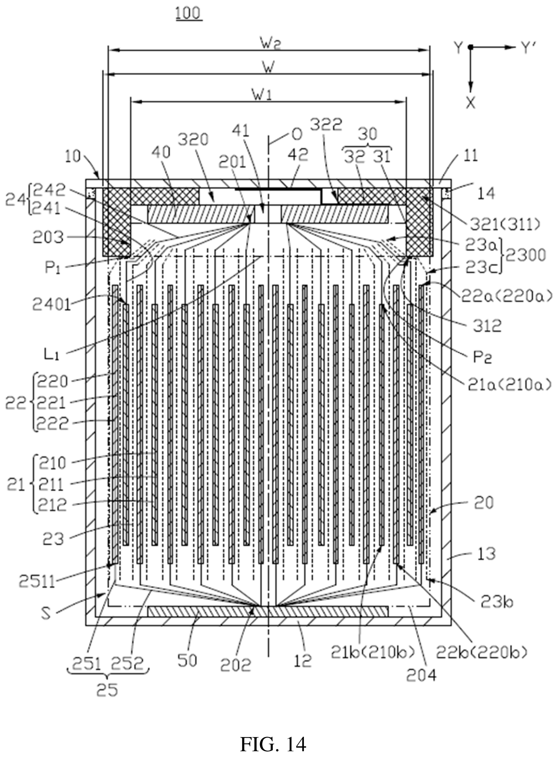

As shown in FIG. 14, in some other embodiments, the width W of the insulating sleeve 30 may alternatively be greater than the width W₂ of the second portion 204. For example, as shown in FIG. 14, a thickness of the first region 31 in the second direction Y' may be increased, such that the width W of the insulating sleeve 30 is greater than the width W₂ of the second portion 204. On one hand, this helps enhance a mechanical strength of the insulating sleeve 30, thereby improving an impact resistance of the electrode assembly 20 during mechanical abuse and reducing a possibility of damage to the electrode assembly 20 due to movement; on the other hand, a width of the first current collecting member 40 in the second direction Y' may be appropriately increased, which facilitates an increase in a contact area between the second connection region 242 and the first current collecting member 40, facilitating welding of the second connection region 242 to the first current collecting member 40, and improving reliability of the electrical connection. When viewed from the first direction X and the second direction Y, W₁ is below W₂, and W₂ is below W.

Measurement steps for W₁, W₂, and W may be: (1) performing a two-dimensional projection and scanning test on the electrochemical apparatus 100 in the second direction Y by using X-rays, where instruments well known to those skilled in the art (for example, GE Phoenix vtomex S equipment) may be used to obtain a CT image; and (2) directly measuring values of W₂ and W by using a caliper or other suitable measuring tools, and then marking the positions of the first intersection point P₁ and the second intersection point P₂ to directly measure a value of W₁.

The measurement steps for W₁, W₂, and W may alternatively be: (1) discharging the electrochemical apparatus 100 at 0.2C to 2.75 V; (2) preparing a resin composition formulated from a crystal resin matrix (for example, epoxy resin), a catalyst, and a curing agent at a certain proportion; (3) pouring the resin composition into a mold, cutting the first wall 11 of the electrochemical apparatus 100, obliquely placing it in the mold to reduce possible residual bubbles at the bottom of the electrochemical apparatus 100, and then continuing to slowly pour the resin composition to completely immerse the electrochemical apparatus 100 in the resin composition so as to allow the resin composition to slowly flow into the housing 10 through the cut of the housing 10; (4) positioning the electrochemical apparatus 100 horizontally, expelling excess bubbles, and leaving the electrochemical apparatus 100 to stand until the resin composition is solidified; (5) cutting the electrochemical apparatus 100 along a cross section parallel to the first direction X and polishing the cut surface to obtain a cross section of the electrochemical apparatus 100; and (6) directly measuring values of W₂ and W by using a caliper or other suitable measuring tools, and then marking the positions of the first intersection point P₁ and the second intersection point P₂ to directly measure a value of W₁.

In this application, the insulating sleeve 30 is disposed within the housing 10, and the insulating sleeve 30 is disposed on the first tab 24. The first region 31 of the insulating sleeve 30 can isolate at least a portion of the first connection region 241 and the third wall 13 which exhibit opposite polarities, reducing a possibility of a short circuit caused by contact between the first connection region 241 and the third wall 13. Additionally, the second region 32 of the insulating sleeve 30 can fill a space between the second connection region 242 and the housing 10, reducing damage to the electrode assembly 20 due to movement along the first direction X within the housing 10 during mechanical abuse (such as dropping, collision, and vibration), thereby improving impact resistance. Therefore, this application improves the reliability and service life of the electrochemical apparatus 100. Furthermore, since the first region 31 and the second region 32 of the insulating sleeve 30 are integrally connected, compared to a technical solution of the prior art in which four sides of the first connection region 241 need to be coated with an adhesive and an additional insulating pad needs to be provided between the second connection region 242 and the first wall 11, this application facilitates simplification of the process. Moreover, compared to another insulating structure formed by an insulating tape or a coating adhesive, the insulating sleeve 30 of this application has higher mechanical strength, and therefore can further improve impact resistance of the electrode assembly 20 during mechanical abuse reducing a possibility of damage to the electrode assembly 20 due to movement.

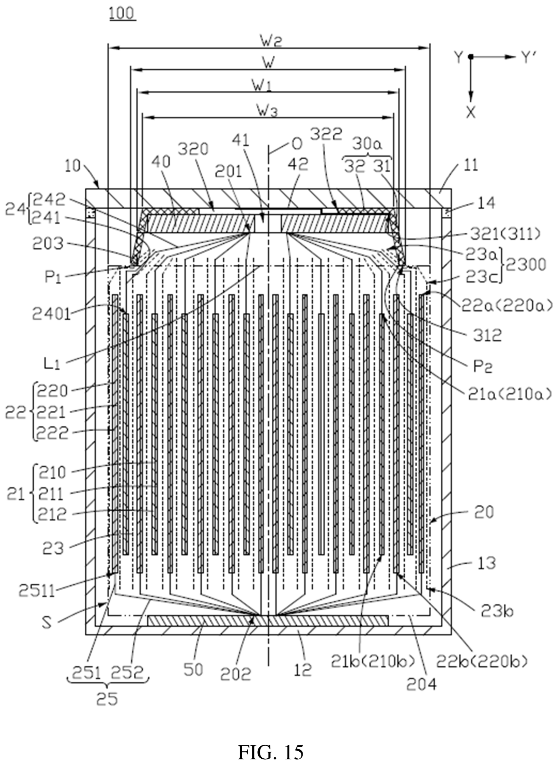

Referring to FIG. 15, in an insulating sleeve 30a of some other embodiments, the first region 31 extends from the first end 311 deviating from the first direction X, such that the first region 31 is inclined relative to the first direction X. Additionally, the second end 312 is farther from the winding center axis O than the first end 311. At this time, the width W of the insulating sleeve 30a is an outer diameter of the first region 31 at the second end 312. Thus, when viewed from the second direction Y, a distance between the inclined first region 31 and a portion of the first connection region 241 within the insulating sleeve 30a increases, which helps reduce a possibility of fracture caused by contact between this portion of the first connection region 242 and the first region 31 in movement during mechanical abuse of the electrochemical apparatus 100, thereby improving impact resistance. Moreover, an outer diameter W of the first region 31 at the second end 312 is larger than a diameter W3 of the first region 31 at the first end 311, facilitating the sleeving of the insulating sleeve 30a onto the first tab 24.

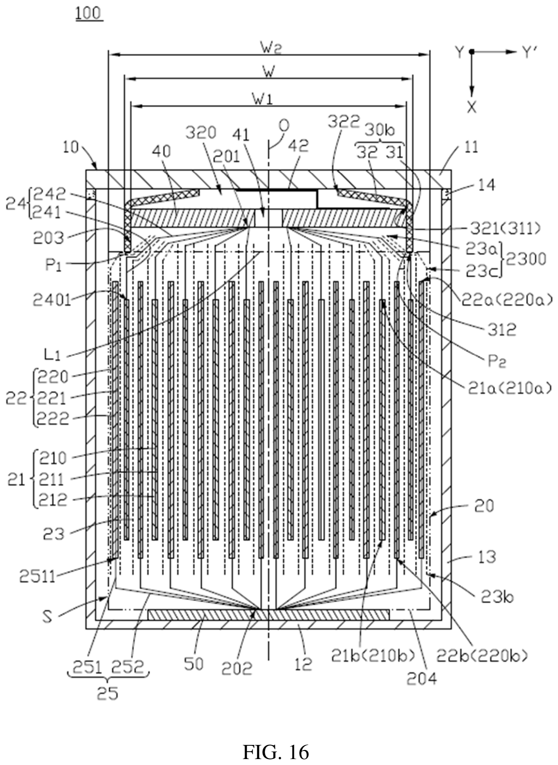

Referring to FIG. 16, in an insulating sleeve 30b of still some other embodiments, the first region 31 extends from the first end 311 along the first direction X or extends deviating from the first direction X. Additionally, the second region 32 extends from the third end 321 deviating from the second direction Y', such that the second region 32 is inclined relative to the second direction Y'. In the first direction X, the fourth end 322 is farther from the second end 312 than the third end 321. Thus, the inclined second region 32 can not only fill the space between the second connection region 242 and the first wall 11 but also provide better buffering during mechanical abuse of the electrochemical apparatus 100, reducing a possibility of damage to the electrode assembly 20 due to movement within the housing 10.

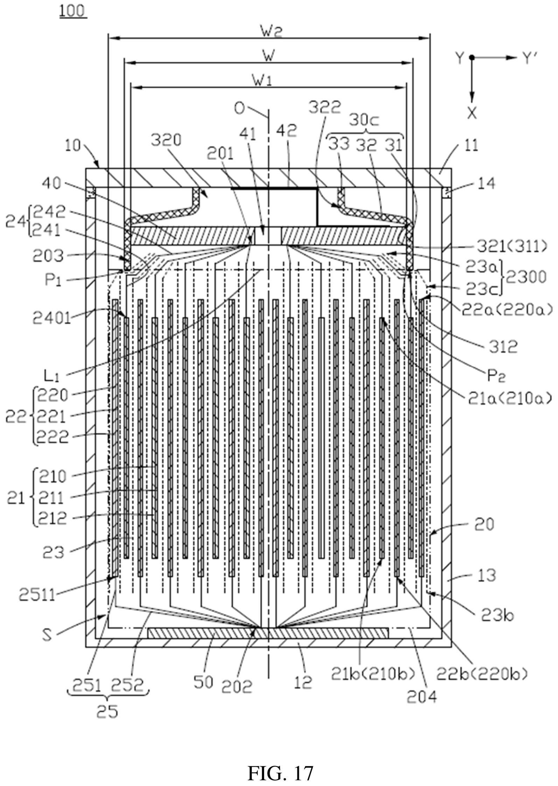

Referring to FIG. 17, further, an insulating sleeve 30c may further include a fourth region 33. The fourth region 33 is connected to the fourth end 322 of the second region 32, and an edge of the first opening 320 extends away from the first region 31 to form the fourth region 33. The fourth region 33 extends along the first direction X. The provision of the fourth region 33 can also fill the space between the second connection region 242 and the first wall 11, reducing a possibility of damage to the electrode assembly 20 due to movement within the housing 10.

Referring to FIG. 3, in some embodiments, when the separator 23 is located on at least a portion of an outermost layer of the electrode assembly 20, the separator 23 located on the outermost layer includes a first inclined region 2300 that overlaps with both the first connection region 241 and the first region 31 in the second direction Y. The first inclined region 2300 is inclined relative to the first direction X. At this time, the first intersection point P₁ and the second intersection point P₂ are actually intersection points of the virtual line L₁ and the first inclined region 2300. The first inclined region 2300 can further isolate at least a portion of the first connection region 241 and the third wall 13 which exhibit opposite polarities, reducing a possibility of a short circuit caused by contact between the first connection region 241 and the third wall 13. Additionally, since the separator 23 is relatively soft, during mechanical abuse of the electrochemical apparatus 100, the first inclined region 2300 can reduce a possibility of fracture caused by direct contact between the at least a portion of the first connection region 241 and the first region 31, thereby improving impact resistance. The first inclined region 2300 includes a fifth end portion 23a and a seventh end portion 23c disposed opposite the fifth end portion 23a. The fifth end portion 23a is closer to the winding center axis O than the seventh end portion 23c. The separator 23 may extend along the first direction X from the sixth end portion 23b to the seventh end portion 23c. When viewed from the first direction X, the second end 312 of the first region 31 overlaps with the first inclined region 2300. When viewed from the second direction Y, the second end 312 is in contact with the first inclined region 2300. Since the second end 312 is in contact with the first inclined region 2300, the first region 31 can limit the first inclined region 2300, reducing a possibility of the first inclined region 2300 expanding away from the winding center axis O and being folded during mechanical abuse. The first inclined region 2300 being inclined relative to the first direction X means that an overall extension direction of the first inclined region 2300 is inclined relative to the first direction X. Since the separator 23 is relatively soft, a contact position between the first inclined region 2300 and the second end 312 may form a stepped portion as shown in FIG. 3. A portion of the separator 23 close to the fifth end portion 23a is inclined toward the winding center axis O during the flattening process of the first tab 24, and the first region 31 limits the first inclined region 2300, thereby forming the first inclined region 2300.

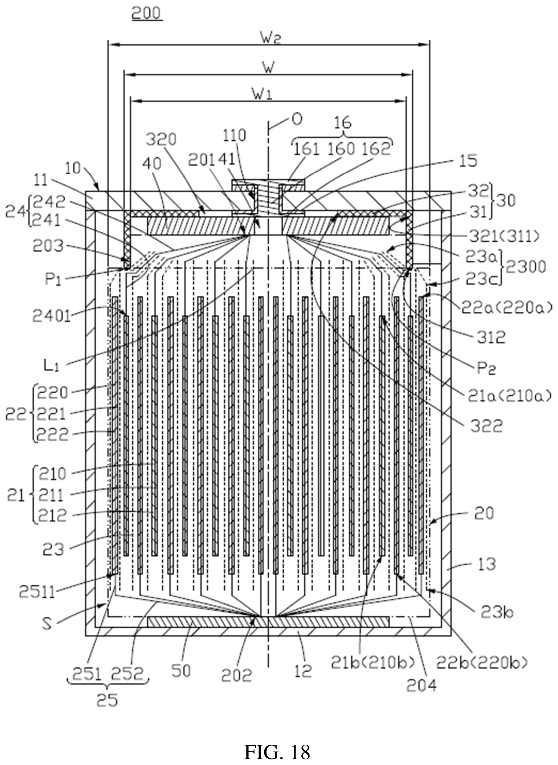

Referring to FIG. 18, another embodiment of this application further provides an electrochemical apparatus 200, which differs from the foregoing electrochemical apparatus 100 in that the first wall 11 of the housing 10 is provided with a through hole 110, where the through hole 110 is in communication with the accommodating cavity S. The housing 10 may further include a pole 16 disposed within the through hole 110. The pole 16 is electrically isolated from the first wall 11. For example, a second insulating layer 15 may be disposed between the pole 16 and the first wall 11, where the second insulating layer 15 is configured to electrically isolate the pole 16 from the first wall 11. At this time, the third wall 13 and the second wall 12 may be integrally formed, and the first wall 11 and the third wall 13 may be fixed through welding or snap-fitting.

Further, the second connection region 242 is electrically connected to the pole 16 through the first current collecting member 40, and the fourth connection region 252 is electrically connected to the second wall 12 through the second current collecting member 50. Thus, the first wall 11 and the pole 16 exhibit opposite polarities, enabling the electrochemical apparatus 200 to supply power to external components (not shown in the figure). When the first electrode plate 21 is a positive electrode plate and the second electrode plate 22 is a negative electrode plate, the pole 16 exhibits positive polarity, and the first wall 11, the second wall 12, and the third wall 13 exhibit negative polarity.

In some embodiments, the bendable segment 42 of the first current collecting member 40 may be omitted. The pole 16 includes a first pole plate 161, a second pole plate 162, and a pole body 160 connected between the first pole plate 161 and the second pole plate 162. The pole body 160 is disposed within the through hole 110. The first pole plate 161 and the second pole plate 162 are respectively disposed on two opposite surfaces of the first wall 11, and the second pole plate 162 is located within the accommodating cavity S. The second pole plate 162 also extends into the first opening 320 and is in contact with the first current collecting member 40, thereby achieving electrical connection between the pole 16 and the first current collecting member 40.

In this embodiment, the first region 31 of the insulating sleeve 30 can isolate at least a portion of the first connection region 241 and the third wall 13 which exhibit opposite polarities, reducing a possibility of a short circuit caused by contact between the at least a portion of the first connection region 241 and the third wall 13. Additionally, the second region 32 of the insulating sleeve 30 can not only fill a gap between the first tab 24 and the first wall 11 of the housing 10 to reduce movement of the electrode assembly 20 within the housing 10 during mechanical abuse of the electrochemical apparatus 200, but also isolate the second connection region 242 and the first wall 11 which exhibit opposite polarities to reduce a possibility of a short circuit caused by contact between the second connection region 242 and the first wall 11, further improving the reliability and service life of the electrochemical apparatus 200. Furthermore, when the housing 10 is entirely made of steel, since the insulating sleeve 30 isolates the first tab 24, which exhibits positive polarity, from the housing 10, a possibility of corrosion of the steel housing by the electrolyte can also be reduced.

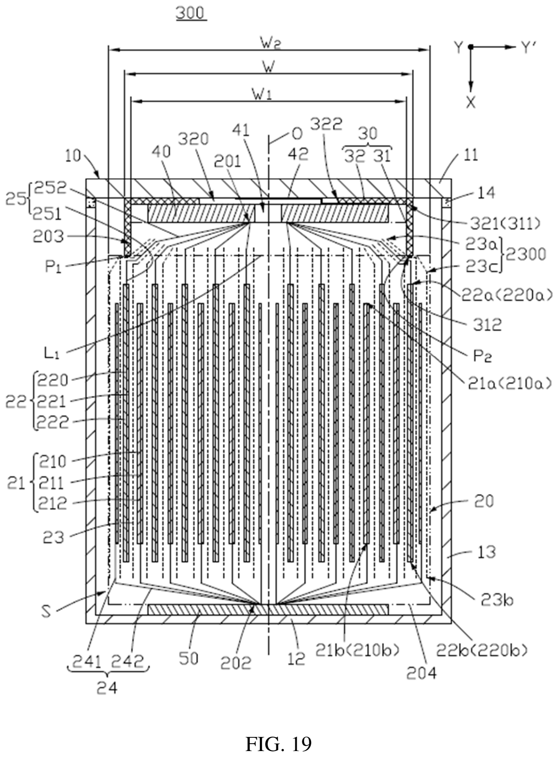

Referring to FIG. 19, another embodiment of this application further provides an electrochemical apparatus 300 which differs from the foregoing electrochemical apparatus 100 in that the fourth connection region 252 of the second tab 25 is electrically connected to the first wall 11, and the second connection region 242 of the first tab 24 is electrically connected to the second wall 12. When the first electrode plate 21 is a positive electrode plate and the second electrode plate 22 is a negative electrode plate, the first wall 11 exhibits negative polarity, and the second wall 12 and the third wall 13 exhibit positive polarity.

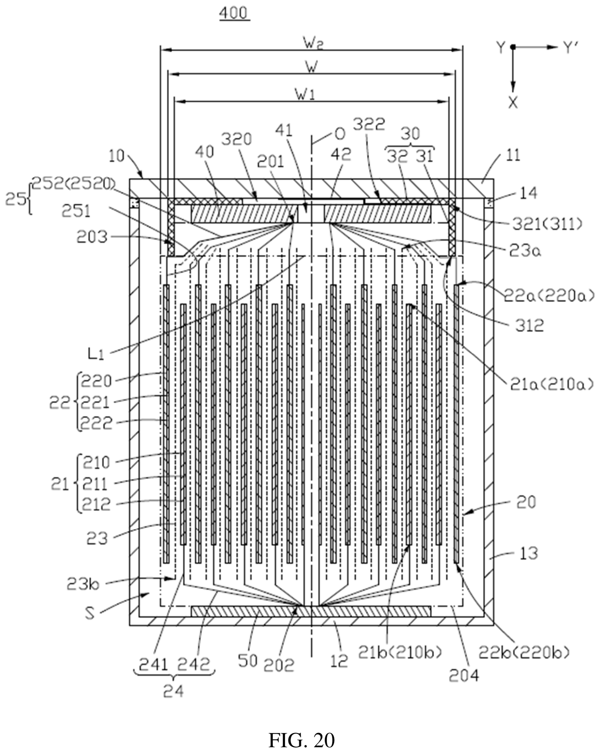

Referring to FIG. 20, another embodiment of this application further provides an electrochemical apparatus 400 which differs from the foregoing electrochemical apparatus 300 in that after winding, the second electrode plate 22 is located on at least a portion of an outermost layer of the electrode assembly 20. For example, the second electrode plate 22 is located on the outermost layer of the electrode assembly 20. The second connection region 252 of the second tab 25 of the second electrode plate 22 located on the outermost layer forms a second inclined region 2520, where the second inclined region 2520 is inclined relative to the first direction X. When viewed from the second direction Y, the second end 312 is in contact with the second inclined region 2520.

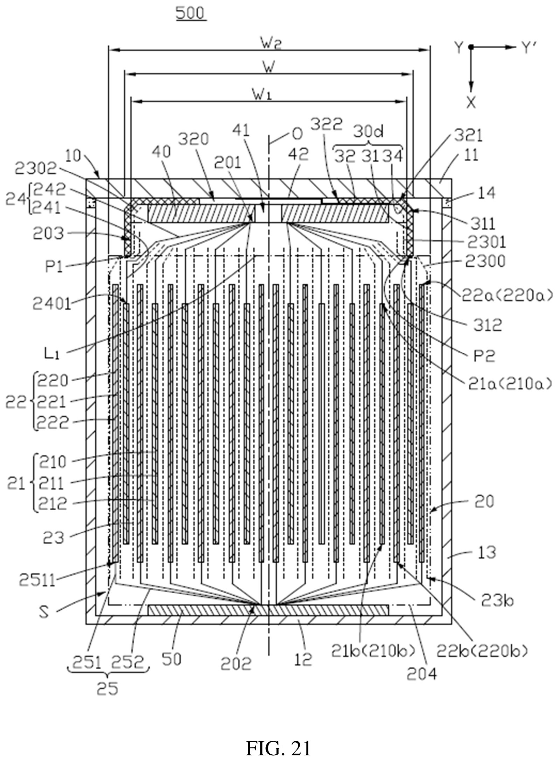

Referring to FIG. 21, another embodiment of this application further provides an electrochemical apparatus 500 which differs from the foregoing electrochemical apparatus 100 in that an insulating sleeve 30d further includes a third region 34, where the third region 34 is connected between the first end 311 of the first region 31 and the third end 321 of the second region 32. The third region 34 extends from the first end 311 deviating from the first direction X. The provision of the third region 34 can reduce a possibility of formation of a sharp tip at a joint between the first region 31 and the second region 32, thereby reducing an impact of such a sharp tip on the housing 10 during mechanical abuse and improving impact resistance of the electrochemical apparatus 500.

Further, in some embodiments, the separator 23 located on the outermost layer further includes a third connection region 2301 connected to the first inclined region 2300 and a second inclined region 2302 connected to the third connection region 2301. The third connection region 2301 is located between the first inclined region 2300 and the second inclined region 2302. When viewed from the second direction Y, the third connection region 2301 and the second inclined region 2302 each overlap with the first region 31. The third connection region 2301 may extend substantially along the first direction Y. The second inclined region 2302 is inclined relative to the first direction X. It can be understood that, since the separator 23 is relatively soft, if the separator 23 has a large dimension in the first direction X before the flattening step, after the insulating sleeve 30d sleeves onto the first tab 24, the separator 23 forms the second inclined region 2302 at a position corresponding to the third region 34. An inclination angle of the second inclined region 2302 may be substantially equal to an inclination angle of the third region 34. Since the separator 23 is relatively soft, when the first current collecting member 40 moves within the insulating sleeve 30d due to mechanical abuse, the second inclined region 2302 can provide a certain buffering effect, reducing a possibility of damage caused by direct contact between the first current collecting member 40 and the insulating sleeve 30d, thereby improving impact resistance.

The electrochemical apparatus 100 (or electrochemical apparatus 200, 300, 400, or 500) of this application includes all apparatuses in which electrochemical reactions can take place. Specifically, the electrochemical apparatus 100 includes all types of primary batteries, secondary batteries, fuel batteries, solar batteries, and capacitors (for example, super capacitors). Optionally, the electrochemical apparatus 100 may be a lithium secondary battery, including a lithium metal secondary battery, a lithium-ion secondary battery, a lithium polymer secondary battery, and a lithium-ion polymer secondary battery.

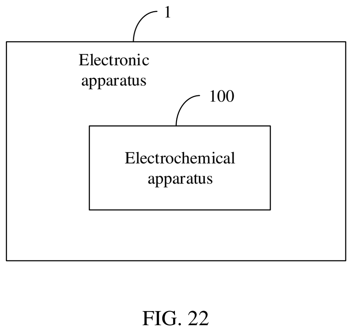

Referring to FIG. 22, an embodiment of this application further provides an electronic apparatus 1, including the foregoing electrochemical apparatus 100 (or electrochemical apparatus 200, 300, 400, or 500). The electronic apparatus 1 is supplied with power by the electrochemical apparatus 100. Due to the provision of the insulating sleeve 30 in the electrochemical apparatus 100, the insulating sleeve 30 can reduce a possibility of a short circuit caused by contact between the first tab 24 and the housing 10 and can also reduce movement of the electrode assembly 20 within the housing 10 during mechanical abuse of the electrochemical apparatus 100, thereby maintaining high reliability and long service life. In one embodiment, the electronic apparatus 1 of this application may include, but is not limited to, a laptop computer, a pen-input computer, a mobile computer, an e-book reader, a portable phone, a portable fax machine, a portable copier, a portable printer, a head-mounted stereo headset, a video recorder, an liquid crystal display television, a portable cleaner, a portable CD player, a mini-disc player, a transceiver, an electronic notebook, a calculator, a memory card, a portable recorder, a radio, a backup power supply, a motor, an automobile, a motorcycle, a power-assisted bicycle, a bicycle, a lighting fixture, a toy, a gaming console, a clock, an electric tool, a flashlight, a camera, a large household storage battery, or a lithium-ion capacitor.

The above disclosure represents preferred embodiments of this application but certainly is not intended to limit this application. Therefore, equivalent changes made in accordance with this application still fall within the scope covered by this application.

## Claims

1. An electrochemical apparatus, comprising:
a housing; and
an electrode assembly disposed within the housing, wherein the electrode assembly is a wound structure and comprises a first electrode plate, the first electrode plate comprises a first current collector and a first tab, a direction of a winding center axis is defined as a first direction, the first current collector comprises a first side and a second side oppositely disposed in the first direction, and the first side extends to form the first tab;
the first tab comprises a first connection region connected to the first side and a second connection region connected to the first connection region, the second connection region is bent relative to the first connection region, the electrode assembly comprises a first end face and a second end face oppositely disposed in the first direction, and the second connection region forms the first end face; and
the electrochemical apparatus further comprises an insulating sleeve; the insulating sleeve comprises a first region and a second region integrally connected; the first region covers the first connection region; the second region is disposed on the second connection region and has a first opening; a portion of the second connection region is exposed from the first opening; the electrode assembly comprises a first portion and a second portion connected in the first direction; when viewed from a second direction perpendicular to the first direction, the first portion overlaps with the insulating sleeve, and the second portion is separated from the insulating sleeve; and in the second direction, a width of the first portion is less than a width of the second portion.

2. The electrochemical apparatus according to claim 1, wherein a width of the insulating sleeve is less than the width of the second portion.

3. The electrochemical apparatus according to claim 1, wherein the first region comprises a first end connected to the second region and a second end disposed opposite the first end, and the first region extends from the first end along the first direction.

4. The electrochemical apparatus according to claim 3, wherein the insulating sleeve further comprises a third region, the third region is connected between the first end and the second region, and the third region extends from the first end deviating from the first direction.

5. The electrochemical apparatus according to claim 1, wherein the first region comprises a first end connected to the second region and a second end disposed opposite the first end, the first region extends from the first end deviating from the first direction, and the second end is farther from the winding center axis than the first end.

6. The electrochemical apparatus according to claim 1, wherein the second region comprises a third end connected to the first region and a fourth end disposed opposite the third end, the fourth end encloses the first opening, and the second region extends from the third end along the second direction.

7. The electrochemical apparatus according to claim 1, wherein the second region comprises a third end connected to the first region and a fourth end disposed opposite the third end, the fourth end encloses the first opening, the second region extends from the third end deviating from the second direction, and the fourth end is farther from the second connection region than the third end.

8. The electrochemical apparatus according to claim 1, wherein the insulating sleeve further comprises a fourth region, and an edge of the first opening extends away from the first region to form the fourth region.

9. The electrochemical apparatus according to claim 1, wherein the electrode assembly further comprises a second electrode plate and a separator, and the first electrode plate, the separator, and the second electrode plate are sequentially stacked and wound to form the electrode assembly.

10. The electrochemical apparatus according to claim 9, wherein the separator is located on at least a portion of an outermost layer of the electrode assembly.

11. The electrochemical apparatus according to claim 10, wherein the separator located on the outermost layer comprises a first inclined region overlapping with both the first connection region and the first region in the second direction; the first inclined region is inclined relative to the first direction; the first region comprises a first end connected to the second region and a second end disposed opposite the first end; and when viewed from the first direction, the second end overlaps with the first inclined region.

12. The electrochemical apparatus according to claim 11, wherein the separator located on the outermost layer further comprises a third connection region connected to the first inclined region and a second inclined region connected to the third connection region; and when viewed from the second direction, the third connection region and the second inclined region each overlap with the first region, and the second inclined region is inclined relative to the first direction.

13. The electrochemical apparatus according to claim 11, wherein the second end is in contact with the first inclined region.

14. The electrochemical apparatus according to claim 9, wherein the second electrode plate comprises a second current collector and a second tab, the second current collector comprises a third side and a fourth side oppositely disposed in the first direction, and the fourth side extends to form the second tab; and
the second tab comprises a third connection region connected to the fourth side and a fourth connection region connected to the third connection region, the fourth connection region is bent relative to the third connection region, and the fourth connection region is located at the second end face.

15. The electrochemical apparatus according to claim 14, wherein the housing comprises a first wall disposed toward the first end face, a second wall disposed opposite the first wall, and a third wall connected to both the first wall and the second wall; the first wall is electrically isolated from the second wall; the second connection region is electrically connected to the first wall; and the fourth connection region is electrically connected to the second wall.

16. The electrochemical apparatus according to claim 15, wherein the electrochemical apparatus further comprises a first current collecting member disposed in the first direction between the second connection region and the second region, and the second connection region is electrically connected to the first wall through the first current collecting member.

17. The electrochemical apparatus according to claim 16, wherein the first current collecting member is provided with a second opening, and when viewed from the first direction, the second opening overlaps with the first opening.

18. The electrochemical apparatus according to claim 15, wherein the fourth connection region is electrically connected to the second wall through a second current collecting member.

19. The electrochemical apparatus according to claim 14, wherein the housing comprises a first wall disposed toward the first end face, a second wall disposed opposite the first wall, a third wall connected to both the first wall and the second wall, and a pole disposed on the first wall; the pole is electrically isolated from the first wall; the second connection region is electrically connected to the pole; and the fourth connection region is electrically connected to the second wall.

20. The electrochemical apparatus according to claim 1, wherein the first electrode plate further comprises a first active material layer and a second active material layer; the first active material layer, the first current collector, and the second active material layer are sequentially stacked; and in the first direction, the insulating sleeve is separated from both the first active material layer and the second active material layer.

21. The electrochemical apparatus according to claim 1, wherein when viewed from the first direction, the insulating sleeve is a continuous annular structure.

22. The electrochemical apparatus according to claim 1, wherein a material of the insulating sleeve comprises at least one of rubber, silicone, or plastic.

23. The electrochemical apparatus according to claim 1, wherein a thickness of the insulating sleeve in the first direction ranges from 0.03 mm to 2 mm.

24. An electronic apparatus, comprising the electrochemical apparatus according to any one of claims 1 to 23.
